# EUROPEAN PATENT SPECIFICATION

(11) **EP 1 637 009 B1**
(45) Date of publication and mention of the grant of the patent: **17.09.2014**
(21) Application number: 04744223.1
(22) Date of filing: 25.06.2004
(51) Int. Cl.: H04R 25/00

(54) **ELECTROMAGNETIC TRANSDUCER WITH REDUCED SENSITIVITY TO EXTERNAL MAGNETIC FIELDS, AND METHOD OF IMPROVING HEARING OR SENSING VIBRATIONS USING SUCH A TRANSDUCER**
ELEKTROMAGNETISCHER WANDLER MIT VERRINGERTER EMPFINDLICHKEIT GEGENÜBER EXTERNEN MAGNETFELDERN UND VERFAHREN ZUR VERBESSERUNG DES HÖRENS ODER ERFASSENS VON VIBRATIONEN UNTER VERWENDUNG EINES SOLCHEN WANDLERS
SYSTEME ET PROCEDE PERMETTANT DE DIMINUER L'EFFET DES CHAMPS MAGNETIQUES SUR UN TRANSDUCTEUR MAGNETIQUE

(30) Priority: 26.06.2003 US 482687 P
(43) Date of publication of application: 22.03.2006
(60) Divisional application: 08075886.5
(73) Proprietor: MED-EL Elektromedizinische Geräte GmbH, 6020 Innsbruck (AT)
(72) Inventor: ZIMMERLING, Martin, A-6082 Patsch (AT)
(74) Representative: Lucke, Andreas
(86) International application number: PCT/IB2004/002588
(87) International publication number: WO 2004/114723

(56) References cited:
- EP-A2- 0 580 117
- US-A- 4 628 907
- US-B1- 6 217 508
- US-B1- 6 313 551
- US-B1- 6 348 070

## Description

### Technical Field

The present invention relates to transducers and external magnetic fields, and more particularly to an apparatus and method for reducing the effect of external magnetic fields on an electro-magnetic transducer which may be positioned, for example, within an implant

### Background Art

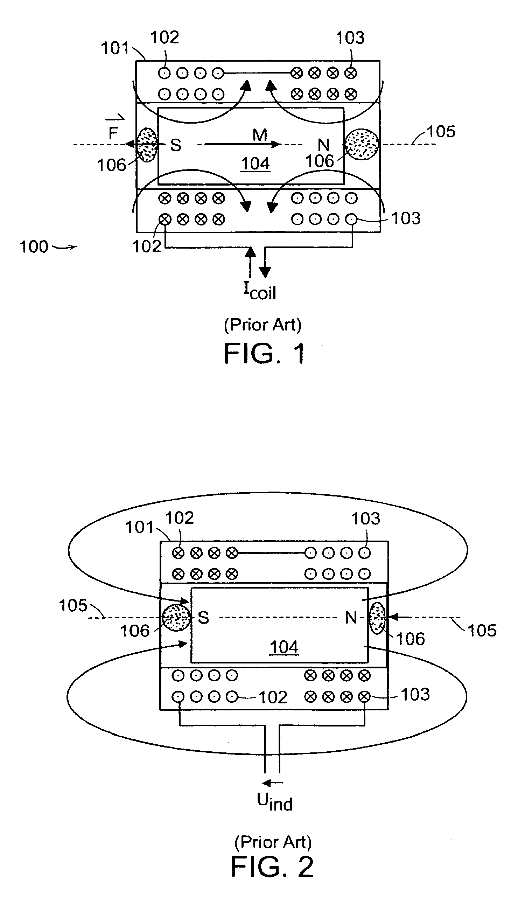

Implants often include various electro-magnetic transducers that may function as an actuator, a sensor, and/or a switch. An example of an implant with an electro-magnetic actuator is a middle ear implant which mechanically drives the ossicular chain. Such a middle ear implant that includes a floating mass transducer was developed by Geoffrey Ball et al., and is shown in Fig. 1 (see United States Patent Numbers: 5,913,815; 5,897,486; 5,624,376; 5,554,096; 5,456,654; 5,800,336; 5,857,958; and 6,475,134, each of which is incorporated herein by reference).

Patent document US6313551 B1 discloses a linear shaft type motor. The motor comprises a magnet assembly and a coil assembly, which are adapted to move relative to each other. The magnet assembly includes a magnet array, a housing and a pair of end caps, preventing any movement of the magnet array relative to the housing. In the magnet assembly, two different types of magnets, namely magnets with an axial polarization and magnets with a transverse polarization, are disposed. Both types of magnets have a tubular shape and are aligned along an axis such that transverse polarized and axial polarized magnets are alternately positioned side-by-side. By the design of the magnet array the flux/mass ratio of the magnet array is improved. This results in an improved efficiency of the motor.

A further prior art example is given by the patent document US6217508 B1. It discloses a direct drive hearing system for providing an ultrasonic signal to a portion of the human ear by means of a floating mass transducer. In one embodiment the transducer includes a cylindrical magnet inside a cylindrical housing. The magnet is biased by two adjacent magnets, which are rigidly associated with the housing. All three magnets are positioned such that same poles of the magnets are adjacent to each other. Around the housing a pair of coils is wound such that in response to an electrical signal applied to the coils the magnet inside the housing is caused to vibrate. Further, embodiments with a spherical magnet for reducing friction inside the housing and with a pair of silicone cushions acting as a biasing mechanism are described.

A further prior art example is provided by patent document US4628907 A, which discloses a direct contact hearing aid. An output transducer is coupled with the ossicle bones of the human ear. The output transducer converts an audio output signal into a mechanical movement of an output coupling rod. In one embodiment the output transducer includes a permanent magnet which surrounds a coil. The magnet is rigidly connected to a mounting ring. Within the mounting ring the coil is positioned in rigid connection with a magnetic core tube and with the output coupling rod. The mounting ring is connected with the magnetic core tube via a pair of flexible diaphragms, through which the output coupling rod extends. In response to an output signal applied to the coil the coil moves relative to the magnet and the flexible diaphragms are deflected. The coupling rod is moved together with the coil.

An electro-magnetic transducer according to the preamble of claim 1 is known from EP 0 580 117 A2.

As shown in Fig. 1, the floating mass transducer 100 includes a housing 101 and at least one coil 102 and 103 coupled to the housing 101. A magnet 104 disposed within the housing 101 is biased by biasing elements 106. The biasing elements 106 are used in defining a resonance frequency, and also reduce friction between the magnet 104 and the interior surface of the housing 101 that may cause distortion. Electrical signals through the at least one coil 102 and 103 cause the magnet 104 to vibrate relative to the housing 101 along an axis 105. The vibration of the magnet 104 causes inertial vibration of the housing 101, which consequently produces vibrations in the inner ear.

Implants may also include an electro-magnetic sensor. Electro-magnetic sensors may be utilized, without limitation, in a microphone, such as a microphone used in converting the mechanical vibrations of an ossicle in the middle ear into an electrical signal. Another application of an electro-magnetic sensor may be to detect the stapedius reflex (a reflex in the middle ear typically elicited when exceeding the maximum comfortable loudness level). Other methods for detection of the stapedius reflex typically require a sophisticated surgical technique and special electrodes for recording the myo-electric evoked response, such as a hook electrode patented by Lenarz et al. (see for example, U.S. Patent 6,208,882), or are inconvenient, such as stapedius reflex detection by external tymphanometers. Fig. 2 (prior art) depicts an electro-magnetic sensor which in principle could be employed as a stapedius reflex sensor.

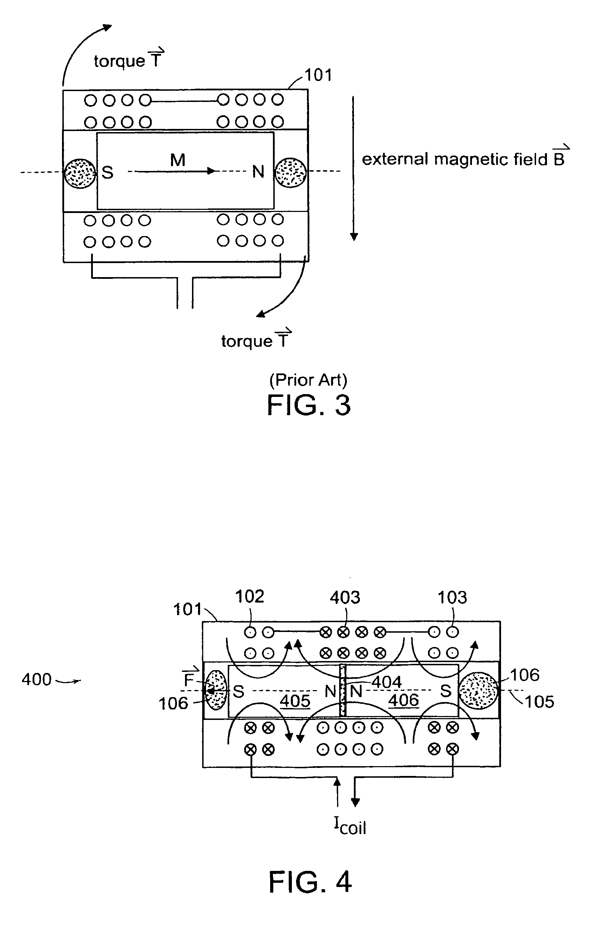

Upon a wearer of such an auditory (cochlear or middle ear) prosthesis having to undergo Magnetic Resonance Imaging (MRI) examination, interactions between the implanted electro-magnetic transducer and the applied external MRI magnetic field may, at higher field strength (i.e. above about 1 Tesla), produce three potentially harmful effects:
1. The implanted magnet experiences a torque (T = m x B) that may twist the electro-magnetic transducer out of its position, thereby injuring the implant wearer and/or destroying the mechanical fixation, as shown in Fig.3 (prior art).
2. Due to the external magnetic field, the implanted magnet becomes partly demagnetized and this may lead to damage or at least to a reduced power efficiency of the electro-magnetic transducer after exposure to the MRI field.
3. Magnetic RF pulses (magnetic field B₁ in MRI) emitted by the MR unit can induce voltages in the coil(s) of the electro-magnetic transducer and this may destroy the transducer and/or may harm the patient.

Because of these risks it may be generally forbidden to undergo (at least high-field) MRI examination for patients with an implant with electro-magnetic transducer. This may exclude the patient from certain important diagnosis methods.

### Summary of the Invention

The invention relates to electro-magnetic transducers, and a method of driving a shaft, as recited in the appended claims.

Applications for the above-described transducers, which are free of torque and the risk of demagnetization in the presence of a strong magnetic field, shall not be limited to use in MRI environments and not limited to medical implants.

### Brief Description of the Drawings

The foregoing features of the invention will be more readily understood by reference to the following detailed description, taken with reference to the accompanying drawings, in which:
Fig. 1 schematically shows a known electro-magnetic transducer with differential coils and a cylindrical magnet acting as a mechanical stimulator, as employed in a middle ear implant, where a current flow in the coils results in a movement of the magnet which translates into a movement of the housing (PRIOR ART);
Fig. 2 schematically shows a known electro-magnetic transducer with differential coils and a cylindrical magnet acting as a mechanical sensor, where the movement of the housing translates into a movement of the magnet, resulting in an induction of voltages in the coils (PRIOR ART);
Fig. 3 schematically shows a known electro-magnetic transducer experiencing a torque as a result of an external magnetic field (e.g. in an MRI scanner) that is not parallel to the magnetic moment of the magnet of the transducer (PRIOR ART);
Fig. 4 schematically shows an electro-magnetic transducer acting as a mechanical stimulator, the transducer including two anti-parallel mounted cylindrical magnets and one or more coils, in accordance with one embodiment of the invention;
Fig. 5 is a chart illustrating the axial component of the magnetic field generated by a current flow through the coils (and, for comparison, for a current flow only through the inner coil) of the transducer depicted in figure 4, in accordance with one embodiment of the invention;
Fig. 6 schematically shows an electro-magnetic transducer acting as a mechanical stimulator, that includes a spherical magnet and a keeper;
Fig. 7 schematically shows an electro-magnetic transducer acting as a mechanical stimulator, the transducer including two spherical magnets and a keeper;
Fig. 8 is a chart illustrating the axial component of the magnetic field generated by a current flow through the coils of the transducer depicted in figure 7;
Fig. 9 schematically shows the transducer of figure 7 acting as motion sensor;
Fig. 10 schematically shows the transducer of figure 7 when a strong external magnetic field (e.g. of an MR scanner) oriented anti-parallel to the magnetic moments of the spherical magnets is present, the spheres rotating by 180° to align their magnetic field with the external field;
Fig. 11 schematically shows the transducer of figure 7 when a strong external magnetic field (e.g. of an MR scanner) oriented perpendicular to the magnetic moments of the spherical magnets is present, the spheres rotating by 90° to align their magnetic field with the external field, with the spherical magnets repelling each other;
Fig. 12 schematically shows an electro-magnetic transducer acting as a mechanical stimulator, the transducer including a spherical magnet, a keeper, and a shaft;
Fig. 13 schematically shows an electro-magnetic transducer acting as a rotational mechanical stimulator;
Fig. 14 schematically shows the electro-magnetic transducer of Fig. 10 that additionally includes a switch that is in a closed position; and
Fig. 15 schematically shows the electro-magnetic transducer of Fig. 11 that additionally includes a switch that is in an open position.

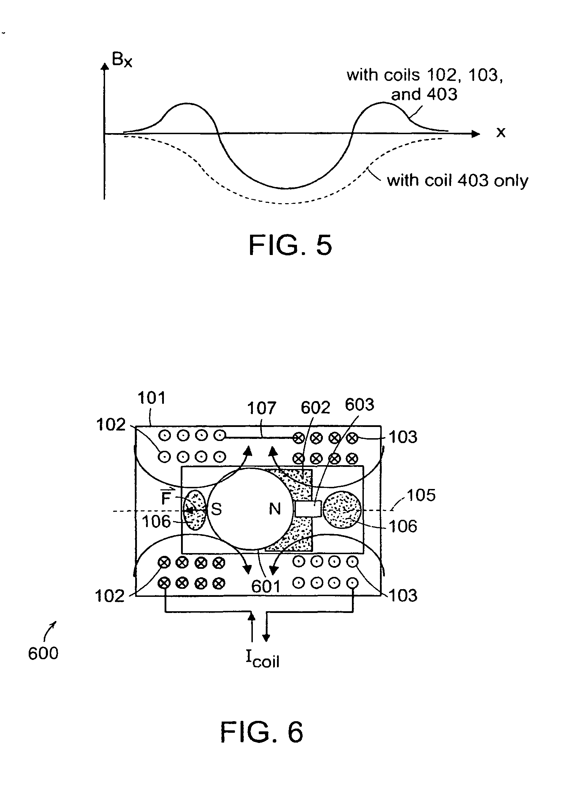

The transducers of Figs. 6 to 15 do not fall within the scope of the appended claims.

### Detailed Description of Specific Embodiments

In illustrative embodiments, an electro-magnetic transducer is presented that advantageously reduces the effect of external magnetic fields. The transducer is generally free of torque in the presence of an external magnetic field of any direction and orientation. Moreover, in various embodiments, the transducer resists de-magnetization and is safe against induction of voltages arising from magnetic pulses that may occur, for example, during Magnetic Resonance Imaging (MRI).

Fig. 4 shows a transducer 400 acting as a mechanical stimulator in accordance with one embodiment of the invention. As used in this description, and the accompanying claims, the term "transducer" as used herein shall mean a device that converts energy or information of one physical quantity into another physical quantity. A transducer may act as a sensor and/or a stimulator/driver, as known in the art.

The transducer 400 includes a housing 101, which in preferred embodiment is non-ferromagnetic. The housing may be hermetically sealed so as to prevent corrosion and/or leakage of material into or out of the housing. The housing may be made of a biocompatible material, particularly when the transducer is to be implanted. Material used for the housing may include, without limitation, stainless steel, titanium, iron, aluminum, platinum, nylon or a ceramic.

At least one coil 102, 103 and 403 is associated with the housing 101, and may be mounted externally or within the housing 101. For example, as shown in Fig. 4, the housing 101 may be associated with three coils 102, 103, and 403, with the middle coil 403 wound in a direction that is different from the other two coils 102 and 103.

At least two magnets 405 and 406, that may be, without limitation, substantially identical in terms of their magnetic moments and cylindrical in nature, are mounted back to back (for, example, with either their north poles or south poles adjacent) in an anti-parallel configuration along an axis 105 within the housing 401. Since the two magnets 405 and 406 have opposite magnetic moments, the total torque exerted to the arrangement in the presence of an external magnetic field of any orientation (e.g. in an MRI unit) is substantially zero.

In various embodiments not falling within the scope of the appended claims, a simplified arrangement with only one coil may be used. Such an arrangement may be less efficient since the force on the transducer magnets 405 and 406 is proportional to the local gradient of the magnetic field generated by the coil(s) 101, 102 and 403. Figure 5 shows the axial distribution of the axial component of the magnetic field generated by one and three coils, in accordance with an embodiment of the invention.

Note that the embodiment shown in Figure 4 works fine for external magnetic field strengths that cannot weaken one of the magnets 405 and 406. At even stronger external magnetic fields, the magnet that is oriented anti-parallel to the external magnetic field may be diminished. This leads to a residual net magnetization for the two magnets 405 and 406, thus resulting in a torque exerted to the two magnets 405 and 406.

In the claimed embodiments, the coils 102, 103 and 403 are arranged such that the net voltage induced from a magnetic RF pulse is substantially zero. For example, in the embodiment shown in Fig. 4, the added inductance of coils 102 and 103 is chosen to be substantially identical to the inductance of coil 403. Consequently, the induced voltage from coils 102 and 103 will be substantially equal to, and compensate for, the induced voltage from coil 403. This results in the substantial elimination of residual signals produced when the system is exposed to a homogeneous electromagnetic field, such as from an MRI unit.

Fig. 6 schematically shows a transducer 600 acting as a mechanical stimulator. The transducer 600 includes a housing 101, which is preferably non-ferromagnetic, and which may be hermetically sealed and biocompatible, as described in above embodiments. The transducer 600 further includes a spherical magnet 601, a magnetically soft element 603 (referred to herein and in the claims as a keeper), and at least one coil 102 and 103.

The keeper 603 includes magnetically soft material that becomes magnetized in the direction of an external magnetic field. The keeper 603 may include, without limitation, a solid alloy, Ferrite, or Ferrofluid. When placed adjacent an external part that includes a magnet 601, the keeper 603 becomes magnetized and becomes attracted to the magnet 601, holding/keeping the magnet 601 in place, so that the magnet 601 is prevented from rattling.

The spherical magnet 601 is mechanically free to turn into any direction and to move along the transducer's axis 105 of rotational symmetry. In the absence of an external magnetic field, an attractive force between the keeper 603 (which is mechanically free to move along the transducer's axis 105 of rotational symmetry) and a magnetic pole of the spherical magnet 601 causes opposing magnetic poles of the magnet 601 to be aligned parallel to the transducer's axis 105 of rotational symmetry. Thus, the spherical magnet 601 can act like a standard cylindrical magnet in a state-of-the-art electro-magnetic transducer. Without the keeper 603, the orientation of the magnetic moment of the spherical magnet 601 would be undefined, and this would lead to an undefined movement of the magnet 601 in the transducer 600. In alternative embodiments, the keeper 603 may be replaced by any other system or principle that keeps the magnetic moment of the spherical magnet parallel to the axis 105 of symmetry of the transducer 600.

In the presence of a strong external magnetic field, the magnetization of the keeper 603 aligns in the direction of the external magnetic field, while the spherical magnet 601 turns to align its magnetic momentum vector with the external magnetic field. Thus, the electro-magnetic transducer 600 is free of torque and cannot be demagnetized in the presence of a strong external magnetic field of any direction and orientation, e.g. during Magnetic Resonance Imaging (MRI). In various embodiments, the two coils 102 and 103 are identical but are winded in opposite directions, ensuring the net voltage induced from a magnetic RF pulse is substantially zero.

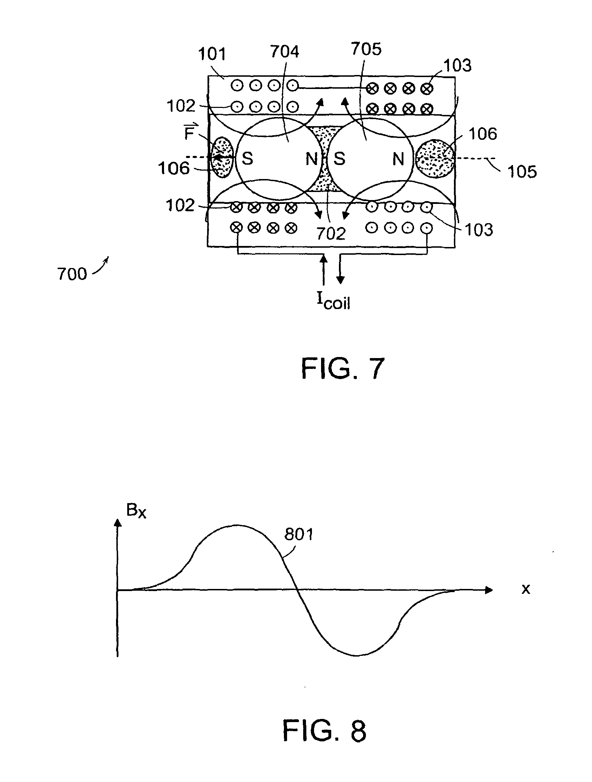

Furthermore, there is provided a transducer 700 acting as a mechanical stimulator that includes a housing 101 with at least two coils 102, 103 and at least two spherical magnets 704, 705, as shown in Fig. 7. The spherical magnets 704 and 705 are mechanically free to turn in any direction and to move along the device's axis 105 of rotational symmetry. The housing 101 may have a cylindrical arrangement and be non-ferromagnetic, similar to above described embodiments. The axial magnetic field distribution 801 generated by the coils is depicted in fig. 8.

A non-magnetic adapter 702 with spherical calottes, preferably made of or coated by Teflon® or a similar material, may be placed between the two attracting spherical magnets 704 and 705 to reduce the punctual pressure and, when the spheres turn, the friction between the two spheres 704 and 705. Furthermore, the adapter 702 may include a material that reduces the reluctance between the magnets 704 and 705.

In the absence of any strong external magnetic field, the spherical magnets 704 and 705 are magnetically attracted together (the north pole of one magnet is attracted by the south pole of the other magnet) and form a stable magnetic moment with undefined orientation parallel to the axis 105 of symmetry. Since the attractive force between the spheres 704 and 705 is designed to be much stronger than the force resulting from the magnetic field generated by the coils 102, 103, the orientation of the magnetic moment of the magnets 704 and 705 can generally not be altered by a current in the coils 102, 103. The spherical magnets 704 and 705 thus act like a single standard (cylindrically shaped) magnet in a state-of-the-art electro-magnetic transducer, where the magnet can only move along its axis but cannot change its orientation.

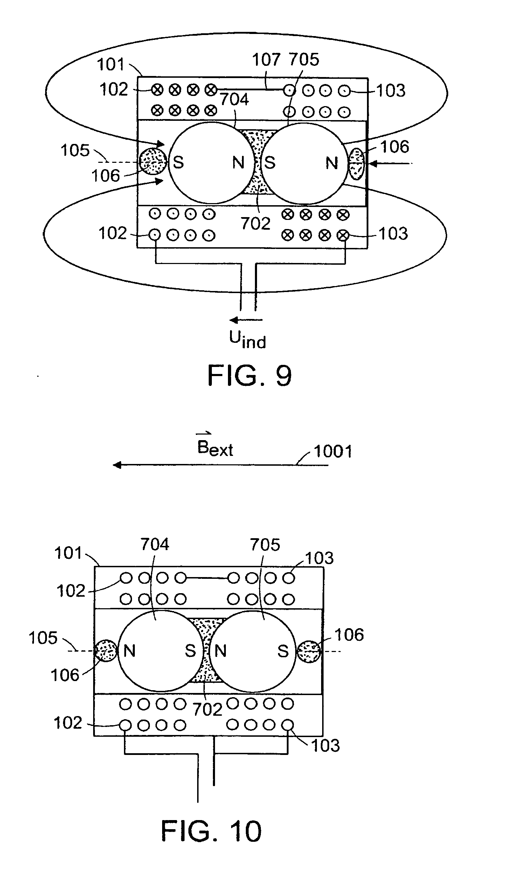

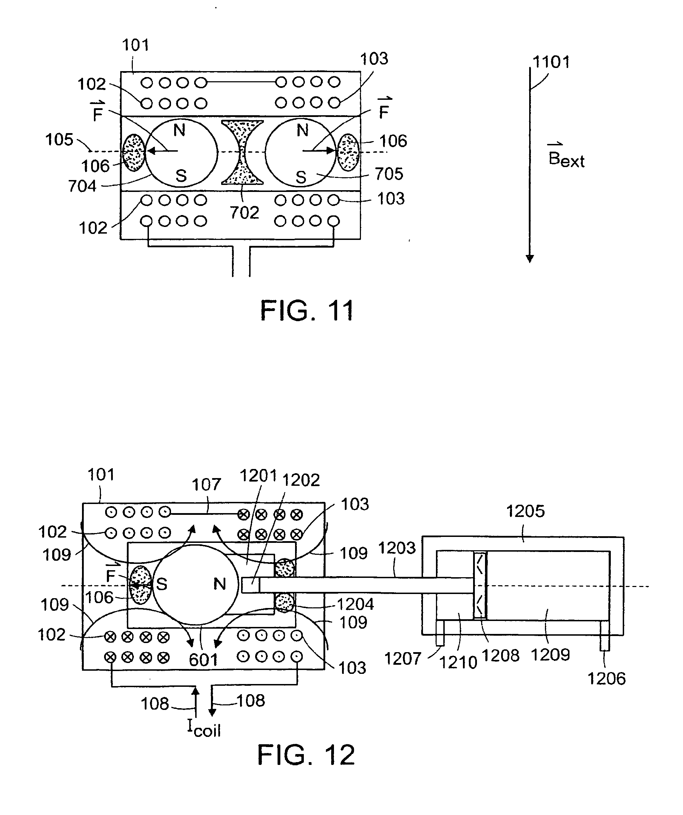

When a strong external magnetic field of any direction and orientation is present, the spherical magnets 704 and 705 can align their magnetic moments with that external field. If the external field is orientated parallel to the device's axis 105 of symmetry and is facing into the same direction like the magnetic moments of the spherical magnets 704 and 705, the magnets 704 and 705 keep their orientation. In case of an anti-parallel external magnetic field 1001, the two spheres 704 and 705 (and the direction of their magnetic moment) flip by 180°, as shown in Fig. 10. The two spherical magnets 704 and 705 of the electro-magnetic transducer act like a single magnet with reverse magnetic poles, causing a movement of the magnets 704 and 705 into the opposite direction. If an external magnetic field 1101 is oriented normal to the device's axis 105 of rotational symmetry, the spherical magnets 704 and 705, when aligning their magnetic moments parallel to the orientation of the external field, are repelling each other, but like for any orientation of the external magnetic field no torque is exerted to the magnets, and no (partial) demagnetization of the magnets 704 and 705 can occur, as shown in Fig. 11. Because the two coils 102 and 103 are identical but winded in different orientation, the net voltage induced from a magnetic RF pulse is zero.

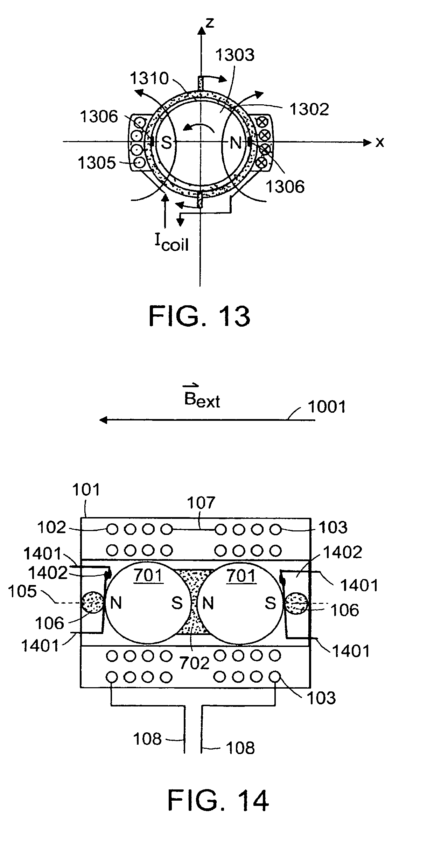

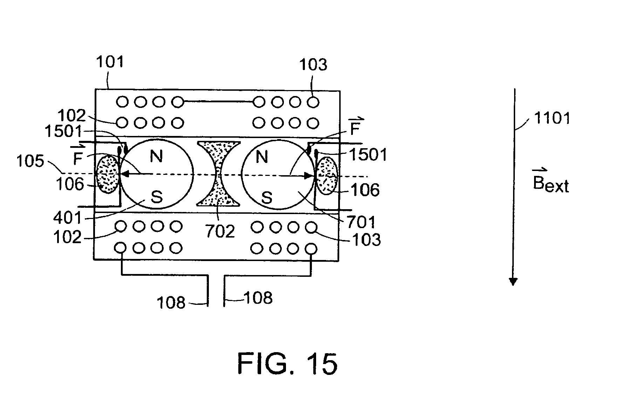

The situation in which both magnets 704 and 705 are repelling each other (i.e., when a strong magnetic field perpendicular to the device's axis 105 is present) may be additionally exploited for a switching function. For example, Figs. 14 and 15 illustrate the switch shown in Figs. 10 and 11, respectively, having electrical connections 1401 and electrical spring contacts 1402 added. In the absence of any external magnetic field or in the presence of a strong magnetic field parallel to the axis of symmetry of the device, as shown in Fig. 14, the spring contacts 1402 are closed. In the event of heavily vibrating magnets, the two electrical switches may temporarily open but at any time one of the two contacts is closed. In the presence of a strong magnetic field normal to the axis of symmetry of the device, as shown in Fig. 15, both spring contacts 1402 are open because the two spherical magnets are repelling.

Further transducers may include more than two spherical magnets. Magnets of any shape (e.g. a cube) may be embedded into a sphere or a cylinder. Parts of low mechanical friction (e.g. Teflon®) and/or low magnetic reluctance may be placed between each two magnets. Such parts may have a shape that fits optimally between two spheres and may help to further reduce the torque exerted to the embodiment. In other transducers the spherical magnets may be coated by a layer of low friction (e.g. Teflon®) or may be immersed in a lubrication material to minimize friction. Also, ball bearings instead of low-friction gliding elements may be placed between the spherical magnets.

With regard to the above-described electromagnetic transducers for translational vibrations, the vibrations of the magnet(s) may be transferred to the housing via biasing members 106. Such designs are called "floating mass transducers." In various transducers, the biasing members are positioned between the vibrating magnet(s) and the housing so as to prevent the magnets from directly contacting the housing. As described above, the biasing members 106 may be used to define a resonance frequency, and/or to reduce friction between the magnet(s) and the interior surface of the housing that may cause distortion. The biasing members 106 are typically flexible and resilient, and may be made of, without limitation, silicone and/or a spring-like material.

The vibrating magnets in the above-described transducers may drive shafts and/or fluids (hydraulic drivers) instead of vibrating the housing, as shown, without limitation, in Fig. 12. Fig. 12 is a modification of the transducers shown in Fig. 6, which includes one spherical magnet 601 and a keeper 1202 .

Similar to Fig. 6, the keeper 1202 is held in place by a non-magnetic adapter 1201 which is connected to a shaft 1203 (note that alternatively, the non-magnetic adapter 1201 may not be needed if the keeper 1202 itself is shaped so as to maintain itself centered on the axis 105, and if the shaft 1203 is connected to keeper 1202). Due to the shaft 1203, biasing member 1204 may be shaped as a resilient torus. A current flow through the coils 102 and 103 can push or pull the shaft (1203). The shaft 1203 may have, at one end, a piston 1208. The piston 1208 may, without limitation, separate fluid chambers 1209 and 1210 in a container (1205), the container having a fluid inlet 1206 and a fluid outlet 1207. If the piston 1208 is developed as a valve (e.g. allowing to pass fluids only from chamber 1209 to chamber 1210), vibrations of the magnet can pump a fluid, which may be a gas. Alternatively, fluctuations in fluid/gas pressure between the two chambers 1209 and 1210, which are separated by the piston, can induce voltages in the coils, such that the transducer acts as a sensor.

Furthermore a transducer 1300 includes a housing 1310 with a coil 1305 and a spherical magnet 1303, as shown in Fig.13. The spherical magnet 1303 is mechanically free to turn into any direction. In the absence of any external magnetic field and when there is no current flow through the coil 1305, the spherical magnet 1303 is self-aligning (i.e. has a mechanically stable orientation) because of one or more keepers 1306 which are fixed in the housing 1310 and which attract the magnetic poles of the sphere 1303. An alternating current flowing through the coil 1305 generates a magnetic field which exerts a torque to the spherical magnet 1303. Due to the moment of inertia, the sphere 1303 cannot respond (i.e. rotate) fast enough, and a torque in opposite direction is exerted also on the coil 1305 which is fixed relative to the housing 1310. Therefore, an alternating current flow through the coil 1305 causes a rotational vibration of the housing 1310 which may be alternatively employed instead of a translational vibrating electro-magnetic transducer. This embodiment of an electro-magnetic transducer (called "rotating mass transducer") is free of torque and cannot be demagnetized in the presence of a strong external magnetic field of any direction and orientation, like those occurring, without limitation, in a Magnetic Resonance Imaging (MRI) environment.

The above-described electro-magnetic transducers can be used as a driver/stimulator by applying a current to the said coil(s). In various transducers, the coil(s) may be attached to leads that are attached to further circuit elements, which may include, without limitation, a processor or other control elements as known in the art. The electro-transducers may be used, for example, to improve hearing of the subject. This may include without limitation, securing the housing of the electro-magnetic transducer to an ossicle in the middle ear.

In other transducers, the above-described electro-magnetic transducers may be employed as a sensor when operated in reverse mode. For example, Fig.9 shows the transducer of Fig. 7 acting as a sensor. Vibrations (or, in the case of the Rotating Mass Transducer, rotations) generate induction of voltages in the coil(s). Such a sensor may be used, without limitation, in auditory implants to detect the motion of the ossicles, either as a "microphone" in the middle ear or to detect the stapedius reflex.

Furthermore, the electro-magnetic transducers for translational motion containing (spherical) magnets that can mechanically rotate. as described above, may be also employed as electro-magnetic transducers with adjustable polarity. The mechanical response (movement direction of the magnets) to a certain current input into the coil depends on the actual orientation of the magnetic moment(s) of the magnet(s), which may be altered by applying a strong anti-parallel external magnetic field.

The above-described electro-magnetic transducers with magnets that are mechanically free to turn are free of torque during the presence of a strong external magnetic field of any orientation. A small torque may momentarily be exerted during a change of the orientation of the external magnetic field due to friction among the turning magnet(s) and also between the magnet(s) and the housing. Therefore, measures to reduce friction may be used to avoid these small amounts of torque due to friction. These measures include, without limitation, coating the magnets and/or inner surfaces of the housing with Teflon® or similar materials, or using various lubricants known in the art.

Furthermore, electro-magnetic transducers with two or more differential coils, that are winded in different orientations, can be designed, as described above in connection with Fig. 4, such that the total voltage induced in the transducer coils resulting from RF pulses is substantially zero. This can be particularly advantageous for MRI applications.

Although various exemplary embodiments of the invention have been disclosed, it should be apparent to those skilled in the art that various changes and modifications can be made that will achieve some of the advantages of the invention without departing from the true scope of the invention. These and other obvious modifications are intended to be covered by the appended claims.

## Claims

1. An electro-magnetic transducer comprising:
a housing;
at least one coil associated with the housing; and
a plurality of magnets within the housing;
wherein the magnets are aligned along an axis in an anti-parallel orientation, the magnets being free to move, relative to the housing, along the axis, wherein vibration of the magnets cause vibration of the housing,
**characterized in that** the at least one coil includes a plurality of coils, said plurality of coils being arranged such that the induced net voltage of the plurality of coils arising from an external RF field is zero.

2. An electro-magnetic transducer according to claim 1, wherein it further comprises at least one biasing member positioned between one of the magnets and the housing, the biasing member for biasing movement of the magnets.

3. An electro-magnetic transducer according to claim 2, wherein the at least one biasing member is flexible and resilient.

4. An electro-magnetic transducer according to claim 2, wherein the at least one biasing member includes one of a spring and a silicone material.

5. An electro-magnetic transducer according to claim 2, wherein the at least one biasing member prevents the magnets from directly contacting the housing.

6. An electro-magnetic transducer according to claim 1, wherein the transducer is substantially free of torque in the presence of an external magnetic field.

7. An electro-magnetic transducer according to claim 1, wherein the housing is adapted to be fixed to an ossicle.

8. An electro-magnetic transducer according to claim 1, wherein the at least one coil is positioned within the housing.

9. An electro-magnetic transducer according to claim 1, wherein the at least one coil is positioned external to the housing.

10. An electro-magnetic transducer according to claim 1, wherein the magnets include a first magnet having a first pole and a second magnet having a second pole, the first pole and the second pole having similar orientation, the first and second magnets aligned such that the first pole and the second pole are adjacent.

11. An electro-magnetic transducer according to claim 1, wherein the magnets are cylindrical.

12. An electro-magnetic transducer according to claim 1, wherein at least one of the magnets and an inner wall of the housing are coated with a material having a low coefficient of friction.

13. An electro-magnetic transducer according to claim 12, wherein the material is "Teflon".

14. An electro-magnetic transducer according to claim 12, wherein the friction of the magnet is reduced by a lubricant.

15. An electro-magnetic transducer according to claim 1, wherein the at least one coil includes a first and second outer coil, and a middle coil positioned between the first and second outer coils, the middle coil being winded in a direction opposite the two outer coils, such that the number of loops of the middle coil equals the sum of loops of the first and second outer coils.

16. An electro-magnetic transducer according to claim 1, wherein the housing is hermetically sealed.

17. An electro-magnetic transducer according to claim 1, wherein the transducer is adapted to act as a sensor.

18. An electro-magnetic transducer according to claim 17, wherein a vibration in the housing causes vibration in the magnets so as to cause a current in the at least one coil.

19. An electro-magnetic transducer according to claim 1, wherein the transducer is adapted to act as an actuator.

20. An electro-magnetic transducer according to claim 19, wherein the alternating current flowing through the at least one coil causes vibration of the magnets, the vibration transferred to the housing.

21. A method of driving a shaft, wherein the method comprises:
providing a transducer that includes a housing, at least one coil associated with the housing and a plurality of magnets within the housing, the magnets being aligned along an axis in an anti-parallel orientation and being free to move, relative to the housing, along the axis: and
causing a current to flow through the at least one coil so as to move the magnet along the axis, movement of the magnet causing the drive shaft to move,
**characterized in that** the at least one coil includes a plurality of coils, said plurality of coils being arranged such that the induced net voltage of the plurality of coils arising from an external RF field is zero.

22. An electro-magnetic transducer comprising:
a housing;
at least one coil associated with the housing; and
a plurality of magnets within the housing;
wherein the magnets are aligned along an axis in an anti-parallel orientation, the magnets being free to move, relative to the housing, along the axis, wherein current flowing through the at least one coil causing movement of the magnet along the axis which in turn causes movement of a driver shaft,
**characterized in that** the at least one coil includes a plurality of coils, said plurality of coils being arranged such that the induced net voltage of the plurality of coils arising from an external RF field is zero.

23. An electro-magnetic transducer according to claim 22, further comprising at least one biasing member positioned between one of the magnets and the housing, the biasing member for biasing movement of the magnets.

24. An electro-magnetic transducer according to claim 22, wherein movement of the driver shaft causes the magnet to move such that current flows through the at least one coil.

## Patentansprüche

1. Elektromagnetischer Wandler, der Folgendes umfasst:
ein Gehäuse;
mindestens eine Spule, die mit dem Gehäuse assoziiert ist; und
eine Mehrzahl von Magneten in dem Gehäuse;
wobei die Magnete entlang einer Achse in einer antiparallelen Orientierung ausgerichtet sind, wobei die Magnete frei sind, sich relativ zu dem Gehäuse entlang der Achse zu bewegen, wobei Vibrationen der Magnete Vibrationen des Gehäuses hervorrufen,
**dadurch gekennzeichnet, dass** die mindestens eine Spule eine Mehrzahl von Spulen umfasst,
wobei die Mehrzahl von Spulen so angeordnet sind, dass die induzierte Nettospannung der Spulen, die von einem externen HF-Feld ausgeht, Null ist.

2. Elektromagnetischer Wandler nach Anspruch 1, der weiter mindestens ein Vorspannungselement umfasst, das zwischen einem der Magnete und dem Gehäuse angeordnet ist, wobei das Vorspannungselement zum Vorspannen der Bewegung der Magneten dient.

3. Elektromagnetischer Wandler nach Anspruch 2, wobei das mindestens eine Vorspannungselement flexibel und elastisch ist.

4. Elektromagnetischer Wandler nach Anspruch 2, wobei das mindestens eine Vorspannungselement entweder eine Feder oder ein Silikonmaterial umfasst.

5. Elektromagnetischer Wandler nach Anspruch 2, wobei das mindestens eine Vorspannungselement die Magneten daran hindert, das Gehäuse direkt zu berühren.

6. Elektromagnetischer Wandler nach Anspruch 1, wobei der Wandler im Wesentlichen kein Drehmoment unter Einfluss eines externen magnetischen Feldes aufweist.

7. Elektromagnetischer Wandler nach Anspruch 1, wobei das Gehäuse so angepasst ist, dass es an einem Gehörknöchelchen befestigt werden kann.

8. Elektromagnetischer Wandler nach Anspruch 1, wobei die mindestens eine Spule in dem Gehäuse angeordnet ist.

9. Elektromagnetischer Wandler nach Anspruch 1, wobei die mindestens eine Spule außerhalb des Gehäuses angeordnet ist.

10. Elektromagnetischer Wandler nach Anspruch 1, wobei die Magneten einen ersten Magneten mit einem mit einem ersten Pol und einen zweiten Magneten mit einem zweiten Pol umfassen, wobei der erste Pol und der zweite Pol eine ähnliche Orientierung aufweisen, wobei der erste und der zweite Magnet so ausgerichtet sind, dass der erste Pol und der zweite Pol an einander angrenzen.

11. Elektromagnetischer Wandler nach Anspruch 1, wobei die Magneten zylindrisch sind.

12. Elektromagnetischer Wandler nach Anspruch 1, wobei mindestens die Magneten und/oder eine Innenwand des Gehäuses mit einem Material beschichtet sind, das einen niedrigen Reibungskoeffizienten hat.

13. Elektromagnetischer Wandler nach Anspruch 12, wobei das Material "Teflon" ist.

14. Elektromagnetischer Wandler nach Anspruch 12, wobei die Reibung des Magneten durch einen Schmierstoff verringert ist.

15. Elektromagnetischer Wandler nach Anspruch 1, wobei die mindestens eine Spule eine erste und eine zweite äußere Spule umfasst sowie eine mittlere Spule, die zwischen der ersten und der zweiten äußeren Spule angeordnet ist, wobei die mittlere Spule in einer Richtung gewickelt ist, die der der beiden äußeren Spulen entgegengesetzt ist, so dass die Anzahl von Schleifen in der mittleren Spule gleich der Summe der Schleifen der ersten und der zweiten äußeren Spule ist.

16. Elektromagnetischer Wandler nach Anspruch 1, wobei das Gehäuse hermetisch abgedichtet ist.

17. Elektromagnetischer Wandler nach Anspruch 1, wobei der Wandler so angepasst ist, dass er als Sensor wirkt.

18. Elektromagnetischer Wandler nach Anspruch 17, wobei die Vibrationen in dem Gehäuse Vibrationen in den Magneten hervorrufen, so dass ein Strom in der mindestens einen Spule hervorgerufen wird.

19. Elektromagnetischer Wandler nach Anspruch 1, wobei der Wandler so angepasst ist, dass er als Aktor wirkt.

20. Elektromagnetischer Wandler nach Anspruch 19, wobei der Wechselstrom, der durch die mindestens eine Spule fließt, Vibrationen der Magneten auslöst, wobei die Vibrationen auf das Gehäuse übertragen werden.

21. Verfahren zum Bewegen eines Stabs, wobei das Verfahren Folgendes umfasst:
Bereitstellen eines Wandlers, der ein Gehäuse, mindestens eine Spule, die mit dem Gehäuse assoziiert ist, und eine Mehrzahl von Magneten in dem Gehäuse umfasst, wobei die Magneten entlang einer Achse in einer antiparallelen Orientierung ausgerichtet sind und frei sind, sich relativ zu dem Gehäuse entlang der Achse zu bewegen; und
Veranlassen, dass ein Strom durch die mindestens eine Spule fließt, um den Magnet entlang der Achse zu bewegen, wobei das Bewegen des Magnets den beweglichen Stab veranlasst, sich zu bewegen,
**dadurch gekennzeichnet, dass** die mindestens eine Spule eine Mehrzahl von Spulen umfasst, wobei die Mehrzahl von Spulen so angeordnet sind, dass die induzierte Nettospannung der Mehrzahl von Spulen, die von einem externen HF-Feld ausgelöst wird, Null ist.

22. Elektromagnetischer Wandler, der Folgendes umfasst:
ein Gehäuse;
mindestens eine Spule, die mit dem Gehäuse assoziiert ist; und
eine Mehrzahl von Magneten in dem Gehäuse;
wobei die Magnete entlang einer Achse in einer antiparallelen Orientierung ausgerichtet sind, wobei die Magnete frei sind, sich relativ zu dem Gehäuse entlang der Achse zu bewegen, wobei Strom, der durch die mindestens eine Spule fließt, eine Bewegung des Magneten entlang der Achse hervorruft, der seinerseits die Bewegung eines Antriebsstabs bewirkt,
**dadurch gekennzeichnet, dass** die mindestens eine Spule eine Mehrzahl von Spulen umfasst,
wobei die Mehrzahl von Spulen so angeordnet sind, dass die induzierte Nettospannung der Mehrzahl von Spulen, die von einem externen HF-Feld hervorgerufen wird, Null ist.

23. Elektromagnetischer Wandler nach Anspruch 22, der weiter mindestens ein Vorspannungselement umfasst, das zwischen einem der Magnete und dem Gehäuse angeordnet ist, wobei das Vorspannungselement dem Vorspannen der Bewegung der Magneten dient.

24. Elektromagnetischer Wandler nach Anspruch 22, wobei die Bewegung des Antriebsstabs bewirkt, dass sich der Magnet so bewegt, dass Strom durch die mindestens eine Spule fließt.

## Revendications

1. Transducteur électromagnétique comprenant :
un logement ;
au moins une bobine associée au logement ; et
une pluralité d'aimants dans le logement ;
dans lequel les aimants sont alignés le long d'un axe dans une orientation antiparallèle, les aimants pouvant se déplacer librement, par rapport au logement, le long de l'axe, dans lequel la vibration des aimants entraîne la vibration du logement,
**caractérisé en ce que** ladite au moins une bobine comprend une pluralité de bobines, ladite pluralité de bobines étant agencées de sorte que la tension nette induite de la pluralité de bobines due à un champ RF externe soit égale à zéro.

2. Transducteur électromagnétique selon la revendication 1, dans lequel il comprend au moins un élément de sollicitation positionné entre l'un des aimants et le logement, l'élément de sollicitation servant à solliciter le déplacement des aimants.

3. Transducteur électromagnétique selon la revendication 2, dans lequel ledit au moins un élément de sollicitation est souple et élastique.

4. Transducteur électromagnétique selon la revendication 2, dans lequel ledit au moins un élément de sollicitation comprend l'un d'un ressort et d'un matériau à base de silicone.

5. Transducteur électromagnétique selon la revendication 2, dans lequel ledit au moins un élément de sollicitation empêche les aimants de venir directement en contact avec le logement.

6. Transducteur électromagnétique selon la revendication 1, dans lequel le transducteur est sensiblement exempt de couple en présence d'un champ magnétique externe.

7. Transducteur électromagnétique selon la revendication 1, dans lequel le logement est conçu pour être fixé à un osselet.

8. Transducteur électromagnétique selon la revendication 1, dans lequel ladite au moins une bobine est positionnée dans le logement.

9. Transducteur électromagnétique selon la revendication 1, dans lequel ladite au moins une bobine est positionnée à l'extérieur du logement.

10. Transducteur électromagnétique selon la revendication 1, dans lequel les aimants comprennent un premier aimant ayant un premier pôle et un deuxième aimant ayant un deuxième pôle, le premier pôle et le deuxième pôle ayant des orientations similaires, les premier et deuxième aimants étant alignés de sorte que le premier pôle et le deuxième pôle soient adjacents.

11. Transducteur électromagnétique selon la revendication 1, dans lequel les aimants sont cylindriques.

12. Transducteur électromagnétique selon la revendication 1, dans lequel au moins l'un des aimants et une paroi interne du logement sont revêtus d'un matériau ayant un faible coefficient de frottement.

13. Transducteur électromagnétique selon la revendication 12, dans lequel le matériau est du « Téflon ».

14. Transducteur électromagnétique selon la revendication 12, dans lequel le frottement de l'aimant est réduit par un lubrifiant.

15. Transducteur électromagnétique selon la revendication 1, dans lequel ladite au moins une bobine comprend des première et deuxième bobines externes, et une bobine centrale positionnée entre les première et deuxième bobines externes, la bobine centrale étant enroulée dans une direction opposée à celle des deux bobines externes, de sorte que le nombre de boucles de la bobine centrale soit égal à la somme des boucles des première et deuxième bobines externes.

16. Transducteur électromagnétique selon la revendication 1, dans lequel le logement est fermé hermétiquement.

17. Transducteur électromagnétique selon la revendication 1, dans lequel le transducteur est conçu pour agir en tant que capteur.

18. Transducteur électromagnétique selon la revendication 17, dans lequel une vibration dans le logement entraîne une vibration dans les aimants de manière à générer un courant dans ladite au moins une bobine.

19. Transducteur électromagnétique selon la revendication 1, dans lequel le transducteur est conçu pour agir en tant qu'actionneur.

20. Transducteur électromagnétique selon la revendication 19, dans lequel le courant alternatif circulant à travers ladite au moins une bobine entraîne une vibration des aimants, la vibration étant transférée au logement.

21. Procédé d'entraînement d'un arbre, dans lequel le procédé comprend :
la fourniture d'un transducteur qui comprend un logement, au moins une bobine associée au logement et une pluralité d'aimants dans le logement, les aimants étant alignés le long d'un axe dans une orientation antiparallèle et pouvant se déplacer librement, par rapport au logement, le long de l'axe ; et
le fait d'amener un courant à circuler à travers ladite au moins une bobine de manière à déplacer l'aimant le long de l'axe, le déplacement de l'aimant entraînant le déplacement de l'arbre d'entraînement,
**caractérisé en ce que** ladite au moins une bobine comprend une pluralité de bobines, ladite pluralité de bobines étant agencées de sorte que la tension nette induite de la pluralité de bobines due à un champ RF externe soit égale à zéro.

22. Transducteur électromagnétique comprenant :
un logement ;
au moins une bobine associée au logement ; et
une pluralité d'aimants dans le logement ;
dans lequel les aimants sont alignés le long d'un axe dans une orientation antiparallèle, les aimants pouvant se déplacer librement, par rapport au logement, le long de l'axe, dans lequel le courant circulant à travers ladite au moins une bobine entraîne le déplacement de l'aimant le long de l'axe qui, à son tour, entraîne le déplacement d'un arbre d'entraînement,
**caractérisé en ce que** ladite au moins une bobine comprend une pluralité de bobines, ladite pluralité de bobines étant agencées de sorte que la tension nette induite de la pluralité de bobines due à un champ RF externe soit égale à zéro.

23. Transducteur électromagnétique selon la revendication 22, comprenant en outre au moins un élément de sollicitation positionné entre l'un des aimants et le logement, l'élément de sollicitation servant à solliciter le déplacement des aimants.

24. Transducteur électromagnétique selon la revendication 22, dans lequel le déplacement de l'arbre d'entraînement entraîne le déplacement de l'aimant de sorte qu'un courant circule à travers ladite au moins une bobine.
